# EUROPÄISCHE PATENTSCHRIFT

(11) **EP 4 525 655 B1**
(45) Veröffentlichungstag und Bekanntmachung des Hinweises auf die Patenterteilung: **01.04.2026**
(21) Anmeldenummer: 23726888.3
(22) Anmeldetag: 09.05.2023
(51) Int. Cl.: A41D 19/00, A41D 19/015, A41D 13/008, A41D 31/26, B29C 41/00, B29C 41/14

(54) **VERFAHREN ZUR HERSTELLUNG ELEKTRISCH ISOLIERENDER SCHUTZHANDSCHUHE MIT STÖRLICHTBOGENSCHUTZ UND SOLCHE SCHUTZHANDSCHUHE**
METHOD FOR THE MANUFACTURE OF ELECTRICALLY INSULATING PROTECTIVE GLOVES WITH ARC PROTECTION AND SUCH PROTECTIVE GLOVES
PROCÉDÉ DE FABRICATION DE GANTS DE PROTECTION ÉLECTRIQUEMENT ISOLANTS CONTRE LES ARCS ÉLECTRIQUES ET GANTS DE PROTECTION DE CE TYPE

(30) Priorität: 18.05.2022 DE 102022204971
(43) Veröffentlichungstag der Anmeldung: 26.03.2025
(73) Patentinhaber: Jung Gummitechnik GmbH, 64683 Einhausen (DE)
(72) Erfinder: TAUCHERT, Elias, 44143 Dortmund (DE)
(74) Vertreter: MERH-IP Matias Erny Reichl Hoffmann Patentanwälte PartG mbB
(86) Internationale Anmeldenummer: PCT/EP2023/062169
(87) Internationale Veröffentlichungsnummer: WO 2023/222435

(56) Entgegenhaltungen:
- WO-A1-2016/099303
- JP-B2- 5 521 003
- US-A1- 2004 123 374
- US-A1- 2005 031 817

## Beschreibung

### TECHNISCHES FELD

Die Erfindung betrifft ein Verfahren zur Herstellung elektrisch isolierender Schutzhandschuhe mit Störlichtbogenschutz auf der Basis thermoplastischer Elastomere in Kombination mit einem Pigment. Das Verfahren wird insbesondere ohne Vulkanisierung durchgeführt. Die Erfindung betrifft weiterhin solche Schutzhandschuhe.

### TECHNISCHER HINTERGRUND

Derzeit werden Schutzhandschuhe gegen elektrische Entladung in der Regel aus Naturkautschuk oder synthetischem Polyisopren hergestellt. Für den praktischen Einsatz müssen elektrisch isolierende Schutzhandschuhe Anforderungen erfüllen, die in entsprechenden Normen geregelt sind, wie beispielsweise in der europäischen Norm IEC 60903:2014 und der US-amerikanischen Norm ASTM D120-21. Entsprechend den obigen Normen werden elektrisch isolierende Schutzhandschuhe in Klassen und Größen eingeteilt. Die Längen sind ebenfalls durch die vorstehend genannten Normen vorgeschrieben. In der nachfolgenden Tabelle 1 sind die jeweiligen Klassen und zugehörigen Werte für die maximale Einsatzspannung in Volt und die Testspannung in Volt gemäß IEC und ASTM im Einzelnen angegeben.

**Tabelle 1: Schutzklasseneinteilung und dementsprechende Anforderungen an elektrisch isolierende Schutzhandschuhe gemäß IEC und ASTM.**

| **Klasse** | **Länge in [mm]** | **Maximale Einsatzspannung in Volt** | **Testspannung in Volt** |
|---|---|---|---|
| 00 | 280/360 mm | 500 V | 2500 V |
| 0 | 280/360/410/460 mm | 1000 V | 5000 V |
| 1 | 360/410/460 mm | 7500 V | 10 000 V |
| 2 | 360/410/460 mm | 17 000 V | 20 000 V |
| 3 | 360/410/460 mm | 26 500 V | 30 000 V |
| 4 | 410/460 mm | 36 000 V | 40 000 V |

Neben der Fähigkeit, elektrische Entladungen zu verhindern, werden an elektrisch isolierende Schutzhandschuhe ebenfalls auch bestimmte mechanische Anforderungen gestellt wie Zugfestigkeit, beispielsweise > 16 N/mm² (MPa); Bruchdehnung, beispielsweise > 600%; bleibende Dehnung (Verformungsbeständigkeit), beispielsweise < 15%; Durchstoßfestigkeit, beispielsweise > 18 N; sowie Beständigkeit gegen die Ausbreitung von Feuer, beispielsweise keine Verbreitung der Flamme nach 55s Feueraussetzung, und Kältebeständigkeit. Außerdem sollen elektrisch isolierende Schutzhandschuhe grundsätzlich auch gegen die Ausbreitung von Hitze, gegen Öl, Ozon, Säure und extrem niedrige Temperaturen beständig sein.

Durch die erwähnten Normen wird ebenfalls auch die Dicke (Materialstärke, Wandstärke) der elektrisch isolierenden Schutzhandschuhe für den praktischen Einsatz bei bestimmten Entladungsstärken vorgegeben, so ist beispielsweise eine maximale Wandstärke von 0,50 mm für Klasse 00, eine maximale Wandstärke von 1,00 mm für Klasse 0, eine maximale Wandstärke von 1,50 mm für Klasse 1, eine maximale Wandstärke von 2,30 mm für Klasse 2, eine maximale Wandstärke von 2,90 mm für Klasse 3 und eine maximale Wandstärke von 3,60 mm für Klasse 4 erlaubt.

Aufgrund der Materialeigenschaften sind bis dato Naturkautschuk und synthetisches Polyisopren die einzigen Materialien, die die Anforderungen gängiger Normen im Hinblick auf elektrisch isolierende Schutzhandschuhe erfüllen.

Zusätzlich zu den bereits genannten Anforderungen wird im praktischen Einsatz zunehmend auch eine Lichtbogenbeständigkeit der elektrisch isolierenden Schutzhandschuhe verlangt, da Lichtbögen bei Arbeiten mit elektrischem Strom entstehen können und sich, ausgelöst durch Kurzschlüsse, als kontinuierliche Entladung hoher Stromspannung in der Luft zwischen zwei Elektroden äußern. Die Folgen können Verbrennungen an Haut und Körper aufgrund extremer Hitzeentwicklung sein. Störlichtbögen können zudem Feuer auslösen. Lichtbogenexplosionen mit Druckwellen von bis zu 1000 kg/m² können schwere Verletzungen verursachen. Schallwellen bis zu 140 dB und ultraviolettes Licht können zu Schäden an Gehör und Augen führen.

Gängigen Verfahren zur Herstellung elektrisch isolierender Schutzhandschuhe aus Naturkautschuk und synthetischem Polyisopren ist gemein, dass die jeweiligen Verfahren in der Regel den Prozess der Vulkanisierung beinhalten. Der Prozess der Vulkanisierung besitzt jedoch wesentliche Nachteile. Das Durchführen einer Vulkanisierung ist energieintensiv. Mit Schwefel vulkanisierte Schutzhandschuhe können allergieauslösende Bestandteile enthalten. Allergene können darüber hinaus auch in Naturkautschuk per se enthalten sein. Das Handschuhmaterial kann aufgrund der chemischen Veränderung während der Vulkanisierung nicht für den Herstellungsprozess wiederverwendet/recycelt werden.

Im Hinblick auf die genannten Nachteile der gängigen Verfahren ist es eine Aufgabe der vorliegenden Erfindung, ein Verfahren zur Herstellung elektrisch isolierender Schutzhandschuhe mit Störlichtbogenschutz bereitzustellen, welches energieeffizient ist, keine allergieauslösenden Bestandteile verwendet oder erzeugt, und welches erlaubt, bei der Herstellung anfallendes Abfallmaterial oder mit dem Verfahren hergestellte Handschuhe in den Herstellungsprozess rückzuführen und damit zu recyclen. Darüber hinaus sollen die elektrisch isolierenden Schutzhandschuhe mit Störlichtbogenschutz die Anforderungen gängiger Normen erfüllen.

JP5521003 B2 betrifft einen elektrisch isolierenden Schutzhandschuh mit Störlichtbogenschutz und offenbart die Merkmale des Oberbegriffs der Ansprüche 1 und 14.

### LÖSUNG DES PROBLEMS

Die Aufgabe wird mit den Merkmalen der unabhängigen Ansprüche 1 und 14 gelöst. Die abhängigen Ansprüche sind auf bevorzugte Ausführungsformen der Erfindung gerichtet. Erfindungsgemäß umfasst ein Verfahren zur Herstellung elektrisch isolierender Schutzhandschuhe mit Störlichtbogenschutz (im Folgenden auch nur Schutzhandschuh oder Handschuh) zunächst den Schritt des Bereitstellens eines Ausgangsmaterials. Das Ausgangsmaterial besteht dabei im Wesentlichen aus zwei thermoplastischen Elastomeren. Mit anderen Worten besteht das Ausgangsmaterial im Wesentlichen aus einem Gemisch aus zwei thermoplastischen Elastomeren.

Der Ausdruck "im Wesentlichen bestehend aus" ist hierin als nahezu abgeschlossen auszulegen, schließt dabei aber nicht aus, dass einige wenige zusätzliche Komponenten, wie hierin beschrieben, dem Ausgangsmaterial zusätzlich hinzugefügt werden können. Thermoplastische Elastomere sind Polymere, in der Regel sogenannte Copolymere, deren Ketten so beschaffen sind, dass sie die folgenden drei Eigenschaften besitzen:
- Thermoplastische Elastomere können bis zu mäßiger Dehnung gestreckt werden und die Struktur kehrt nach Wegfall der Belastung praktisch in ihre ursprüngliche Form zurück;
- Thermoplastische Elastomere lassen sich bei erhöhter Temperatur problemlos verarbeiten; und
- Thermoplastische Elastomere zeichnen sich durch Interaktionen/Wechselwirkungen physikalischer Natur aus.

Thermoplastische Elastomere (TPEs) stellen eine eigene Klasse von Werkstoffen dar. Hinsichtlich ihrer Eigenschaften und Verarbeitungsmöglichkeiten liegen sie zwischen Thermoplasten und Elastomeren. TPEs kombinieren die Verarbeitungseigenschaften von Thermoplasten, beispielsweise Verformbarkeit durch Wärmezufuhr, mit der Weichheit und Flexibilität von Elastomeren. Durch die Herstellung von Polymermischungen oder sogenannten Blends lassen sich die Eigenschaften von TPE-Materialien gezielt steuern, indem beispielsweise eine der Polymerkomponenten vorwiegend die elastischen Eigenschaften, die andere(n) eher die thermoplastischen Eigenschaften zu dem resultierenden Compound beitragen. Dieser Aspekt wird sich in der vorliegenden Erfindung zu Nutze gemacht indem das Ausgangsmaterial im Wesentlichen aus einer Mischung von zwei thermoplastischen Elastomeren besteht.

Die Verwendung von TPEs bietet gegenüber den gängigen Materialien zahlreiche Vorteile. Durch den Einsatz von TPEs kann beispielsweise auf den Zusatz von Latex, Polyvinylchlorid (PVC), Phthalaten oder Schwermetallen und somit auf den Zusatz allergieauslösender Bestandteile verzichtet werden.

Erfindungsgemäß sind die verwendeten thermoplastischen Elastomere hinsichtlich ihrer Struktur grundsätzlich nicht eingeschränkt. Vorzugsweise werden jedoch TPEs mit Styrol-Block-Copolymeren (SBCs), welche in der Regel als TPE-S oder TPS bezeichnet werden, verwendet. Zu den gebräuchlichsten Typen von SBCs gehören:
- SBS: Styrol-Butadien-Styrol-Blockcopolymer;
- SIS: Styrol-Isopren-Styrol-Blockcopolymer;
- SEBS: Styrol-Ethylen-Butylen-Styrol-Blockcopolymer und
- SEPS: Styrol-Ethylen-Propylen-Styrol-Blockcopolymer.

Die Erfinder haben herausgefunden, dass insbesondere die Eigenschaften von SEBS-basierten thermoplastischen Elastomeren für die Herstellung elektrisch isolierender Schutzhandschuhe mit Störlichtbogenschutz vorteilhaft sind. SEBS-basierte thermoplastische Elastomere zeigen eine sehr gute Elastizität und Flexibilität, und hervorragende mechanische Eigenschaften wie Zugfestigkeit, Bruchdehnung, bleibende Dehnung, Durchstoßfestigkeit und Reißfestigkeit. SEBS-basierte thermoplastische Elastomere können transluzent und transparent eingestellt werden. Dies ermöglicht eine breite Palette von Färbungsoptionen. SEBS-basierte thermoplastische Elastomere bieten darüber hinaus ein breites Spektrum von möglichen Additivanwendungen, insbesondere von Pigmenten und Farbstoffen. Außerdem bringen Materialien aus SEBS-basierten thermoplastischen Elastomeren Eigenschaften mit, die auch für zusätzliche Kategorien und Anforderungen in der praktischen Anwendung elektrisch isolierender Schutzhandschuhe sehr wichtig sind. So bieten SEBS-basierte thermoplastische Elastomere eine höhere Temperaturstabilität als Thermoplaste, dies ist insbesondere für den Störlichtbogenschutz im Hinblick auf die Wärmeentwicklung wichtig. SEBS-basierte thermoplastische Elastomere sind elastisch bei niedrigen Temperaturen von bis zu -40°C, so dass auch eine Beständigkeit gegenüber extremer Kälte erreicht werden kann. SEBS-basierte thermoplastische Elastomere weisen eine ausgezeichnete Beständigkeit gegen UV-Strahlung, Ozon und gegen Witterungseinflüsse auf, insbesondere gegen eine oxidative Umgebung. SEBS-basierte thermoplastische Elastomere sind beständig gegenüber Ölen und Fetten bei hohen Temperaturen, sowie beständig gegen Hochtemperatursperrflüssigkeiten und Lösungen auf Wasserbasis, beispielsweise Säure. Gemäß einer bevorzugten Ausführungsform können die beiden thermoplastischen Elastomere daher insbesondere thermoplastische Elastomere auf Styrol-Ethylen-Butylen-Styrol (SEBS) Basis sein. Das bedeutet, das Ausgangsmaterial kann bevorzugt im Wesentlichen aus einem Gemisch aus zwei thermoplastischen Elastomeren auf Styrol-Ethylen-Butylen-Styrol (SEBS) Basis bestehen.

Das Gemisch besteht im Wesentlichen aus einer ersten SEBS-basierten Komponente und einer zweiten SEBS-basierten Komponente. Die erste SEBS-basierte Komponente hat vorzugsweise eine Molekularstruktur von 50-200 Einheiten und einen Polystyrolgehalt von ca. 12-15 %. Die erste Komponente weist damit vorzugsweise eine hohe elastische Eigenschaft auf, die sich in einer hohen Dehnung widerspiegelt. Die zweite SEBS-basierte Komponente hat vorzugsweise eine Molekularstruktur von 50-200 Einheiten und einen Polystyrolgehalt von 30-35%. Die zweite Komponente weist damit vorzugsweise eine hohe mechanische Widerstandsfähigkeit und somit hohe Zugfestigkeitswerte auf. Durch die Kombination der beiden Komponenten können die Eigenschaften des Ausgangsmaterials durch die individuellen Eigenschaften der beiden thermoplastischen Elastomere auf diese Weise gezielt eingestellt werden.

Gemäß einer weiterhin bevorzugten Ausführungsform kann das Ausgangsmaterial zusätzlich aus einer polymeren Hilfskomponente auf Styrolbasis bestehen. Die polymere Hilfskomponente auf Styrolbasis ist vorzugsweise SBS, SIS, SEBS, SEPS oder eine Mischung dieser Komponenten, besonders bevorzugt ist die polymere Hilfskomponente auf Styrolbasis SBS oder SEBS oder eine Mischung dieser beiden. Die polymere Hilfskomponente auf Styrolbasis hat vorzugsweise eine Molekularstruktur zwischen 50-200 Einheiten und einen Polystyrolgehalt von mehr als 50%. Die Hilfskomponente kann in geringerer Menge im Ausgangsmaterial vorhanden sein. Ihre Funktion besteht darin, die Eigenschaften der vorangegangenen beiden Komponenten zu verbessern, beispielsweise durch die Verstärkung der harten Stellen der polymeren Mischung, wodurch die strukturelle Stabilität erhöht wird. Auf diese Weise können Produkte mit hohen Werten in Bezug auf die normgemäßen Anforderungen erhalten werden, ohne dass ein Vulkanisierungsprozess erforderlich ist.

Besonders bevorzugt wird als Ausgangsmaterial ein aus drei Komponenten bestehender Compound eingesetzt, wobei der Compound aus zwei SEBS-basierten thermoplastischen Elastomeren und einer polymeren Hilfskomponente auf Styrolbasis besteht. Besonders bevorzugt liegt die Härte des Compounds in einem Bereich von 30 bis 60 Shore A (DIN ISO 7619-1), 47 Shore A (DIN ISO 48-4). Die Dichte des Compounds ist vorzugsweise 0,940 g/cm³ (DIN EN ISO 1183-1). Die Zugfestigkeit ist vorzugsweise 14 MPa (DIN 53504/ISO 37). Die Bruchdehnung ist vorzugsweise 550% (DIN 53504/ISO 37) und die Weiterreißfestigkeit ist vorzugsweise 38 N/mm (DIN ISO 34-1, Methode B(b) (Graves)). Ein solcher Compound ist beispielsweise unter der Bezeichnung Thermoplast^{®} K, TF5TAA aus der FC/AD1/ht Reihe der Kraiburg TPE GmbH & Co KG erhältlich.

Erfindungsgemäß umfasst ein Verfahren zur Herstellung elektrisch isolierender Schutzhandschuhe mit Störlichtbogenschutz weiterhin den Schritt des Lösens des Ausgangsmaterials in einem organischen Lösungsmittel zur Herstellung einer flüssigen Mischung (im Sinne einer Lösung).

Das organische Lösungsmittel ist erfindungsgemäß nicht grundsätzlich eingeschränkt. Gemäß einer bevorzugten Ausführungsform kann das organische Lösungsmittel jedoch insbesondere Toluol sein.

Gemäß einer weiteren bevorzugten Ausführungsform kann im Schritt des Lösens des Ausgangsmaterials in dem organischen Lösungsmittel eine flüssige Mischung von 10-50% m/m bezogen auf den Anteil des Ausgangsmaterials in dem organischen Lösungsmittel hergestellt werden, besonders bevorzugt 20-35% m/m. Das Anteilsverhältnis des Ausgangsmaterials in dem organischen Lösungsmittel beeinflusst die Viskosität der resultierenden Mischung und bietet so eine Möglichkeit, die aus einem Tauchschritt resultierende Schichtdicke der Materialschicht im nachfolgend beschriebenen Tauchvorgang zu steuern. Ebenso beeinflusst das Anteilsverhältnis des Ausgangsmaterials in dem organischen Lösungsmittel die Stabilität der nachfolgend beschriebenen Dispersion, so dass das Anteilsverhältnis entsprechend der gewünschten Stabilität eingestellt werden kann.

Erfindungsgemäß umfasst ein Verfahren zur Herstellung elektrisch isolierender Schutzhandschuhe mit Störlichtbogenschutz weiterhin den Schritt des Dispergierens eines Pigments in der flüssigen Mischung zur Herstellung einer Dispersion. Das Pigment kann bereits während des Auflösungsprozesses des Ausgangsmaterials hinzugefügt werden. Das Pigment lässt sich vollständig und effizient dispergieren. Die resultierende Dispersion ist für einen Zeitraum von 10-48 h Stunden stabil und damit ausreichend stabil für die Dauer des Herstellungsprozesses. Auf diese Weise kann eine gleichbleibende Produktionsqualität der Schutzhandschuhe gewährleistet werden.

Gemäß einer bevorzugten Ausführungsform kann im Schritt des Dispergierens des Pigments in der flüssigen Mischung eine Dispersion von 0,5-10% m/m bezogen auf den Anteil des Pigments im Verhältnis zum Ausgangsmaterial hergestellt werden, bevorzugt 0,5-5% m/m, besonders bevorzugt 0,5-2,5% m/m.

Grundsätzlich sind die technischen Anforderungen an die Herstellung von Schutzhandschuhen für elektrische Anwendungen so hoch, dass Materialien, die keine polymeren Strukturen auf Polyisoprenbasis aufweisen, bis dato nicht verwendet werden konnten. Die Erfinder haben jedoch vorteilhaft herausgefunden, dass mit der Abstimmung der physikalisch-chemischen und mechanischen Eigenschaften der beiden thermoplastischen Elastomere, insbesondere der SEBS-basierten thermoplastischen Elastomere, zusammen mit der Zugabe des Pigments in Konzentrationen von 0,5-10 % m/m nicht nur die Eigenschaften, die für den elektrischen, mechanischen und physikalisch-chemischen Schutz erforderlich sind, erreicht werden können, sondern auch der Wärmeschutz, so dass die mit dem erfindungsgemäßen Verfahren hergestellten Schutzhandschuhe nicht nur die Anforderungen der Schutzklassen 00 bis 4 gemäß den gängigen Normen, sondern auch Störlichtbogenschutz entsprechend der hierin beschriebenen Schutzklassen bieten.

Das Pigment ist Cu-Phthalocyanin, ein organisches Pigment. Als Pigment kann beispielsweise Cu-Phthalocyanin-Alpha stab. (CAS-Nr.: 147-14-8) mit einer spezifischen Oberfläche von 62 m²/g und einer Dichte von 1,6g/cm³ eingesetzt werden. Dieses Pigment ist pulverförmig beispielsweise unter dem Namen Heliogen^{®} Blue K 6907 bei der BASF SE erhältlich.

Im Sinne der Nachhaltigkeit kann gemäß einer bevorzugten Ausführungsform des Verfahrens zumindest ein Teil des Ausgangsmaterials und des Pigments durch im Verfahren anfallendes Abfallmaterial und/oder mit dem Verfahren hergestellte Schutzhandschuhe ersetzt werden. Die aus TPEs und Pigment hergestellten Schutzhandschuhe lassen sich in dem organischen Lösungsmittel, wie hierin beschrieben, auflösen und wiederverwenden, ohne dass sie ihre physikalischen, chemischen und mechanischen Eigenschaften wesentlich verlieren. Im Falle einer teilweisen Ersetzung werden Ausgangsmaterial und Pigment entsprechend der hierin beschriebenen Bereiche für die flüssige Dispersion zusätzlich hinzugefügt. Auf diese Weise können die einmal produzierten und benutzten Handschuhe gesammelt und für die Produktion neuer Handschuhe verwendet werden. Das Gleiche gilt für Handschuhe, die während des Produktionsprozesses anfallen und sofort wieder in den Produktionsprozess zurückgeführt werden können, so dass keine Feststoffabfälle anfallen. Gerade bei der Herstellung von Sicherheitsartikeln, wie beispielsweise elektrisch isolierenden Handschuhen mit hohen technischen Anforderungen und hohem Anfall von Fehlchargen, ist die Wiederverwendung von Rohstoffen von enormer Bedeutung.

Erfindungsgemäß umfasst ein Verfahren zur Herstellung elektrisch isolierender Schutzhandschuhe mit Störlichtbogenschutz weiterhin den Schritt des Bereitstellens mindestens einer Form, die zur Herstellung von Schutzhandschuhen geeignet ist. Zur Herstellung von Schutzhandschuhen geeignet ist beispielsweise eine Form in Gestalt eines vollanatomischen Modells eines Unterarms mit einer Hand. Insbesondere können auch zwei oder mehr Formen verwendet werden, beispielsweise vollanatomische Modelle jeweils eines rechten und eines linken Unterarms mit Hand.

Das Material der mindestens einen Form ist erfindungsgemäß nicht grundsätzlich eingeschränkt. Die Form kann beispielsweise aus Keramik oder Metall bestehen, bevorzugt ist die mindestens eine Form jedoch eine Keramikform.

Die Anzahl an Formen, die gleichzeitig zur Herstellung elektrisch isolierender Schutzhandschuhe in dem erfindungsgemäßen Verfahren eingesetzt werden können, ist nicht eingeschränkt und wird sicherlich von prozessbedingten Kapazitäten abhängen bzw. entsprechend gewählt sein. Es können beispielsweise zwischen 96-140 Formen gleichzeitig eingesetzt werden.

Gemäß einer bevorzugten Ausführungsform kann die mindestens eine Form eine vorbestimmte Oberflächenbeschaffenheit aufweisen. Über die Oberflächenbeschaffenheit der Form lässt sich die Haptik der elektrisch isolierenden Schutzhandschuhe gezielt einstellen. Insbesondere kann die Oberfläche der mindestens einen Form glatt oder rau sein. Der Begriff "rau" ist hierin breit auszulegen. Der Begriff "rau" kann beispielsweise als sandpapierartig oder schleifpapierartig verstanden werden. In diesem Sinne kann die Oberflächenbeschaffenheit der mindestens einen Form auch verschiedene Grade an Rauigkeit aufweisen, entsprechend beispielsweise einer Korngröße im Bereich von > 600 µm bis 18 µm. Mit anderen Worten kann die Oberflächenbeschaffenheit der mindestens einen Form eine Oberflächenbeschaffenheit ausgewählt aus der Gruppe bestehend aus glatt, sehr fein geraut, fein geraut, mittel geraut und grob geraut aufweisen.

Vor der Durchführung des nachfolgend beschriebenen Tauchvorgangs kann das Verfahren optional zusätzlich den Schritt des Konditionierens von Viskosität, Feststoffmasse und/oder Temperatur der Dispersion umfassen. Mit anderen Worten können Viskosität, Feststoffmasse und/oder Temperatur der Dispersion entsprechend der jeweils vorliegenden Prozessbedingungen, beispielsweise Umgebungstemperatur und Luftfeuchtigkeit, angepasst werden, um eine gleichbleibende Qualität der hergestellten Schutzhandschuhe gewährleisten zu können. Bevorzugte Bereiche können beispielsweise Viskosität: 10-80 s, vorzugsweise 10-60 s gemessen bei 25±1°C mit der Ford-Becher Methode; Trockengehalt: 20-45 % m/m und Temperatur: 20-30 °C sein.

Das Verfahren kann ebenfalls optional zusätzlich den Schritt des Vorbereitens der mindestens einen Form umfassend die Schritte: i) Reinigen der mindestens einen Form, beispielsweise mit Toluol; ii) Aufbringen eines Trennmittels, beispielsweise Petroleumbenzin; und iii) Konditionieren der mindestens einen Form für den Tauchvorgang umfassen.

Je nach Material und Beschaffenheit der mindestens einen Form kann das Aufbringen eines Trennmittels das spätere Abziehen der hergestellten Schutzhandschuhe erleichtern.

Und das Verfahren kann ebenfalls optional zusätzlich den Schritt des Vorbereitens eines Tanks für den Tauchvorgang umfassen. Die Größe des Tanks ist erfindungsgemäß nicht grundsätzlich eingeschränkt und wird sich in der Regel sicherlich nach den gegebenen prozessbedingten Kapazitäten richten, beispielsweise der Anzahl der verwendeten Formen.

Erfindungsgemäß umfasst ein Verfahren zur Herstellung elektrisch isolierender Schutzhandschuhe mit Störlichtbogenschutz weiterhin den Schritt des Durchführens eines Tauchvorgangs. Ein Tauchvorgang umfasst mindestens einen Zyklus bestehend aus einem Tauchschritt, in welchem, in einer Eintauchphase, die mindestens eine Form vollständig in die Dispersion eingetaucht wird und, in einer Austauchphase, vollständig wieder aus der Dispersion herausgenommen wird, um eine Materialschicht auf der Form zu bilden; und einem Trocknungsschritt, um das organische Lösungsmittel aus der Materialschicht zu entfernen.

Der beschriebene Tauchvorgang ist ein rein physikalischer Tauchvorgang. Das bedeutet, dass kein thermischer oder chemischer Vorgang für das Eintauchen notwendig ist, also beispielsweise thermosensibles Tauchen oder der Zusatz von Koagulationsmitteln, so dass der Energieverbrauch und der Gebrauch von chemischen Komponenten im Herstellungsprozess vorteilhaft reduziert werden kann.

Gemäß einer bevorzugten Ausführungsform kann der Tauchvorgang aus 1-50 Zyklen bestehen, bevorzugt 5-20 Zyklen. Über die Anzahl an Zyklen kann vorteilhaft die Wandstärke (Dicke) der Schutzhandschuhe eingestellt werden, da sich in jedem Zyklus eine weitere Materialschicht überlagernd auf der mindestens einen Form ausbildet. Die Dicke der individuell gebildeten Materialschichten kann darüber hinaus auch über die Tauchgeschwindigkeit gesteuert werden.

Gemäß einer weiteren bevorzugten Ausführungsform kann im Tauchschritt die mindestens eine Form in der Eintauchphase mit einer vorbestimmten Geschwindigkeit in die Dispersion eingetaucht werden und in der Austauchphase mit einer vorbestimmten Geschwindigkeit aus der Dispersion herausgenommen werden.

Gemäß einer weiteren bevorzugten Ausführungsform kann im Trocknungsschritt die mindestens eine Form konstant rotiert werden. Dies ermöglicht eine gleichmäßige Verteilung der Materialmischung auf der Oberfläche der Form und somit die Ausbildung einer gleichmäßig starken Materialschicht.

Gemäß einer besonders bevorzugten Ausführungsform kann die mindestens eine Form im Trocknungsschritt mit einer vorbestimmten Drehzahl und/oder Rotationsgeschwindigkeit rotiert werden. Die Rotationsgeschwindigkeit kann beispielsweise 20-30 s/Umdrehung betragen, vorzugsweise 25 s/Umdrehung.

Gemäß einer weiterhin bevorzugten Ausführungsform kann der Trocknungsschritt für eine Dauer von 20-60 min. durchgeführt werden.

Das erfindungsgemäße Verfahren zur Herstellung elektrisch isolierender Schutzhandschuhe mit Störlichtbogenschutz kann weiterhin optional den Schritt des Abdampfens verbleibender Lösungsmittelreste nach dem Tauchvorgang umfassen.

Und das erfindungsgemäße Verfahren zur Herstellung elektrisch isolierender Schutzhandschuhe mit Störlichtbogenschutz umfasst weiterhin den Schritt des Abziehens des so gebildeten Schutzhandschuhs von der mindestens einen Form.

Gemäß einer bevorzugten Ausführungsform kann das erfindungsgemäße Verfahren ohne Vulkanisierung (Vulkanisation) durchgeführt werden. Der Grund dafür ist, dass die in dem Verfahren verwendeten thermoplastischen Elastomere (TPEs) die für Elastomere typischen viskoelastischen Eigenschaften aufweisen, ohne jedoch vulkanisiert werden zu müssen. Der Verzicht auf einen Vulkanisierungsprozess bringt den Vorteil mit sich, dass durch den Wegfall die Energie, die für die Erzeugung von Druck und Temperatur im Autoklaven in der Regel erforderlich wäre, nicht aufgewendet werden muss. Da der Vulkanisierungsprozess entfällt, ist also der Energieverbrauch im erfindungsgemäßen Verfahren gegenüber herkömmlichen Verfahren mit Vulkanisierungsprozess deutlich geringer.

Der Wegfall der Vulkanisierung hat den zusätzlichen Vorteil, dass das Material, da es keine typischen Vernetzungsverbindungen aufweist, leicht wiederverwendet und bearbeitet werden kann, um seine ursprüngliche Form oder neue Produkte zu erhalten, entweder durch Temperaturformung oder durch Wiederauflösen in organischem Lösungsmittel, wie es für die hierin beschriebene Herstellung der Schutzhandschuhe verwendet wird.

Die hierin beschriebene Erfindung betrifft weiterhin einen elektrisch isolierenden Schutzhandschuh mit Störlichtbogenschutz. Der elektrisch isolierende Schutzhandschuh mit Störlichtbogenschutz besteht im Wesentlichen aus zwei thermoplastischen Elastomeren auf Styrol-Ethylen-Butylen-Styrol (SEBS) Basis und einem organischen Pigment, Cu-Phthalocyanin, wie hierin beschrieben.

Gemäß einer bevorzugten Ausführungsform kann der Schutzhandschuh weiterhin aus einer polymeren Hilfskomponente auf Styrolbasis bestehen, wie hierin beschrieben.

Gemäß einer weiteren bevorzugten Ausführungsform kann der elektrisch isolierende Schutzhandschuh mit Störlichtbogenschutz zudem die Erfordernisse der Normklassen 00 bis 4 gemäß IEC 60903:2014 erfüllen. Der Bezug auf die derzeit gültige Norm IEC 60903:2014 schließt dabei nicht aus, dass auch die Erfordernisse zukünftiger Änderungen dieser Norm erfüllt sein können. Der elektrisch isolierende Schutzhandschuh mit Störlichtbogenschutz erfüllt ebenso die Erfordernisse des Störlichtbogenschutzes gemäß der hierin beschriebenen Schutzklassen. Der elektrisch isolierende Schutzhandschuh ist erhältlich durch das hierin beschriebene erfindungsgemäße Verfahren.

### KURZE BESCHREIBUNG DER FIGUREN

Figur 1 zeigt das Ergebnis einer Zugfestigkeitsprüfung an einem mit dem erfindungsgemäßen Verfahren hergestellten Schutzhandschuh aus TPEs und Pigment (Jung Gummitechnik internes Labor). Die Kurve entspricht der Spannung bei Dehnung unter den Bedingungen, die in der IEC 60903:2014 Norm beschrieben sind.
Figur 2 zeigt das Ergebnis einer Untersuchung des Störlichtbogenschutzes von Schutzhandschuhen der Klasse 00 auf Klasse APC 1 an mit dem erfindungsgemäßen Verfahren hergestellten Schutzhandschuhen aus TPEs und Pigment (Normprüfung nach IEC 61482 - 1-2, geprüft bei West Energie in Dortmund).

### DETAILLIERTE BESCHREIBUNG BEVORZUGTER AUSFÜHRUNGSBEISPIELE

Im Folgenden werden Beispiele bzw. Ausführungsbeispiele der vorliegenden Erfindung unter Bezugnahme auf die beigefügten Figuren beschrieben.

Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikation der Merkmale der beschriebenen Beispiele bzw. durch Kombination einzelner oder mehrerer Merkmale der beschriebenen Beispiele im Rahmen des Schutzumfanges der Ansprüche umfasst sind.

Im Folgenden wird ein erstes Ausführungsbeispiel der vorliegenden Erfindung näher beschrieben. Das erfindungsgemäße Verfahren zur Herstellung elektrisch isolierender Schutzhandschuhe mit Störlichtbogenschutz basiert auf einem Tauchverfahren ohne Vulkanisierungsprozess, in welchem der durchgeführte Tauchschritt zudem rein physikalisch ist, d.h. eine Form wird mindestens einmalig in eine Dispersion eingetaucht und wieder herausgezogen.

In diesem ersten Ausführungsbeispiel wird als Ausgangsmaterial zur Herstellung der elektrisch isolierenden Schutzhandschuhe mit Störlichtbogenschutz ein Compound aus zwei SEBS-basierten thermoplastischen Elastomeren und einer polymeren Hilfskomponente auf Styrolbasis bereitgestellt, vorzugsweise Thermoplast^{®} K TF5TAA aus der FC/AD1/ht Reihe des Herstellers Kraiburg TPE GmbH & Co KG.

Das Ausgangsmaterial ist eine feste Mischung und wird in Toluol gelöst, wobei eine flüssige Mischung, eine Lösung, von 10-50% m/m bezogen auf den Anteil des Ausgangsmaterials in Toluol, besonders bevorzugt 20-35% m/m hergestellt wird.

In der flüssigen Mischung (Lösung) wird das organische blaue Pigment Cu-Phtalocyanin, vorzugsweise Heliogen^{®} Blue K 6907 des Herstellers BASF SE, dispergiert, wobei eine Dispersion von 0,5-10% m/m bezogen auf den Anteil des blauen Pigments im Verhältnis zum Ausgangsmaterial, bevorzugt 0,5-5% m/m, besonders bevorzugt 0,5-2,5% m/m hergestellt wird. Das Pigment kann bereits während des Lösens des Ausgangsmaterials in Toluol hinzugefügt und dispergiert werden. Die Dispersion ist für 10-48 h Stunden stabil. Stabil bedeutet hierin, dass sich die Dispersion nicht in ihre Bestandteile trennt, d.h. dass sich das Pigment nicht absetzt.

Im Anschluss wird ein Tank für den Tauchvorgang vorbereitet und bereitgestellt, in welchem die Dispersion vorgelegt wird. Ebenso wird mindestens eine Keramikform in Gestalt eines vollanatomischen Modells eines Unterarms mit Hand vorbereitet und bereitgestellt. Die mindestens eine Keramikform kann zunächst mit Toluol gereinigt werden, anschließend kann Petroleumbenzin als Trennmittel aufgetragen werden und die mindestens eine Keramikform kann in der für den Tauchvorgang vorgesehenen Tauchmaschine konditioniert werden. Die Oberfläche der mindestens einen Keramikform kann dabei je nach gewünschter Haptik der elektrisch isolierenden Schutzhandschuhe rau oder glatt sein, wie beschrieben.

Die hergestellte Dispersion kann vor der Durchführung des Tauchvorgangs hinsichtlich Viskosität, Feststoffmasse und/oder Temperatur noch konditioniert werden, wie bereits beschrieben.

Dann werden ein oder mehrere Tauchparameter für den Tauchvorgang festgelegt, d.h. beispielsweise die Anzahl der Zyklen, die Geschwindigkeit des Eintauchens der Form in die Dispersion, die Geschwindigkeit des Herausziehens der Form aus der Dispersion, die Anzahl der Umdrehungen mit welcher die Form während des Trocknungsvorgangs rotiert werden soll, sowie die Trocknungszeit zwischen den Tauchschritten.

In diesem ersten Ausführungsbeispiel besteht der Tauchvorgang aus 10 Zyklen, jeweils bestehend aus einem Tauchschritt, in welchem, in der Eintauchphase, die Form vollständig in die Dispersion eingetaucht wird und, in der Austauchphase, die Form vollständig wieder aus der Dispersion herausgenommen wird, um eine Materialschicht auf der Form zu bilden; und einem Trocknungsschritt, um das Toluol aus der Materialschicht zu entfernen.

Der Trocknungsschritt wird für jeweils 30 min. zwischen den einzelnen Tauchschritten durchgeführt, wobei während des Trocknens die Keramikform konstant rotiert wird. Das bedeutet, dass die Keramikform, sobald sie aus der Dispersion herausgenommen wurde, beispielsweise um 180° um die Längsachse, konstant rotiert wird, um eine gleichmäßige Oberflächenverteilung des Materials zu erreichen. Die Anzahl der Umdrehungen während der Trocknungszeit hängt unter anderem von der Viskosität der Dispersion und der Temperatur ab. In diesem Ausführungsbeispiel wird die Form mit einer Rotationsgeschwindigkeit von 25 s/Umdrehung rotiert, vorzugsweise bei Umgebungstemperatur, beispielsweise zwischen 16°C und 30°C.

Nach Durchführung des Tauchvorgangs wird die nun mit mehreren überlagernden Materialschichten beschichtete Form aus der Tauchanlage entnommen und optional restliches Toluol abgedampft, auch hier vorzugsweise bei Umgebungstemperatur, beispielsweise zwischen 20°C und 35°C.

Der auf der Form ausgebildete Schutzhandschuh wird im Anschluss, beispielsweise manuell, von der Keramikform entfernt.

Bei den auf diese Weise hergestellten elektrisch isolierenden Schutzhandschuhen mit Störlichtbogenschutz wird nun noch der Rand eingestellt, die elektrischen und mechanischen Eigenschaften getestet und die Qualität, beispielsweise visuell, bewertet. Danach können die Handschuhe gekennzeichnet und verpackt werden.

Die mit dem erfindungsgemäßen Verfahren hergestellten Schutzhandschuhe können eine der Oberflächenbeschaffenheit der mindestens einen Form entsprechende Oberfläche aufweisen. Die unterschiedlichen Oberflächen der Schutzhandschuhe ermöglichen jeweils eine spezifischere Ausführung von Tätigkeiten. Die Rauigkeit verbessert beispielsweise die Griffsicherheit und ermöglicht so die Ausübung bestimmter Aufgaben, die mit glatten Handschuhen schwierig wäre.

Die mit dem erfindungsgemäßen Verfahren hergestellten Schutzhandschuhe erfüllen darüber hinaus die den Schutzklassen 00, 0, 1, 2, 3 und 4 entsprechenden Normanforderungen, also etwa maximale Einsatzspannungen von 500 V bis 36 000 V und Testspannungen von 2500 V bis 40 000 V.

In einem zweiten Ausführungsbeispiel wird anstelle des im ersten Ausführungsbeispiel beschriebenen Ausgangsmaterials und des Pigments im Verfahren anfallendes Abfallmaterial und/oder mit dem Verfahren hergestellte, recycelte Schutzhandschuhe verwendet, also beispielsweise die gemäß Ausführungsbeispiel 1 hergestellten Schutzhandschuhe. In diesem Fall kann das Ausgangsmaterial und das Pigment dann ganz oder teilweise durch das Abfallmaterial und/oder durch die mit dem Verfahren hergestellten Handschuhe ersetzt werden, indem das Abfallmaterial und/oder die Handschuhe in Toluol gelöst bzw. dispergiert werden. Im Falle einer teilweisen Ersetzung werden Ausgangsmaterial und Pigment entsprechend der hierin beschriebenen Bereiche für die flüssige Dispersion zusätzlich hinzugefügt. Die anschließenden Verfahrensschritte sind gleich und wie hierin bereits in Ausführungsbeispiel 1 beschrieben.

Die Verwendung des Materials in den Auflösungsschritten für die neue Produktion von Handschuhen wurde ausgiebig getestet und die Ergebnisse sind hervorragend. Die hergestellten Handschuhe weisen auch nach mehreren Wiederverwendungsschritten keinen Verlust relevanter Eigenschaften auf, weder elektrisch, mechanisch noch physikalisch-chemisch.

In der nachfolgenden Tabelle 2 sind die Ergebnisse von Vergleichsuntersuchungen an Schutzhandschuhen aus reinem Naturkautschuk (Durchschnittswerte von Produkten verfügbar auf dem Markt), von erfindungsgemäßen elektrisch isolierenden Schutzhandschuhen mit Störlichtbogenschutz aus neuem TPE Material und Pigment (wie beispielsweise in Ausführungsbeispiel 1 beschrieben mit einem Anteil von 0,5 % Pigment bezogen auf die TPE Masse), sowie erfindungsgemäßen elektrisch isolierenden Schutzhandschuhen mit Störlichtbogenschutz aus wiederverwendetem Material (aus internem Ausschuss hergestellt, wie beispielsweise in Ausführungsbeispiel 1 beschrieben mit einem Anteil von 0,5 % Pigment bezogen auf die TPE Masse) gezeigt.

Wie den Daten aus Tabelle 2 zu entnehmen ist, erfüllen sowohl die erfindungsgemäßen elektrisch isolierenden Schutzhandschuhe aus neuem TPE Material und Pigment, als auch die erfindungsgemäßen elektrisch isolierenden Schutzhandschuhe aus wiederverwendetem Material die Anforderungen der IEC 60903:2014 Norm. Darüber hinaus sind die Eigenschaften der erfindungsgemäßen elektrisch isolierenden Schutzhandschuhe teilweise sogar besser als die von herkömmlichen elektrisch isolierenden Schutzhandschuhen aus Naturkautschuk.

**Tabelle 2: Ergebnisse von Vergleichsuntersuchungen (Jung Gummitechnik internes Labor)**

| Produkt | Probendicke (mm) | Zugfestigkeit (N/mm²) | Bruchdehnung (%) | Spannung bei 100% (N/mm²) | Durchstichkraft (N) | Bleibende Dehnung (%) |
|---|---|---|---|---|---|---|
| Norm IEC 60903:2014 | <1,00 | > 16 | >600 | | >18 | <15 |
| Naturkautschuk | 1,00 | 17,6 | 885 | 0,660 | 40,4 | 1,0 |
| neues TPE-Material und Pigment | 1,00 | 17,7 | 666 | 0,781 | 75,3 | 2,0 |
| wiederverwendetes Material | 0,95 | 17,8 | 700 | 0,838 | 79,7 | 1,7 |

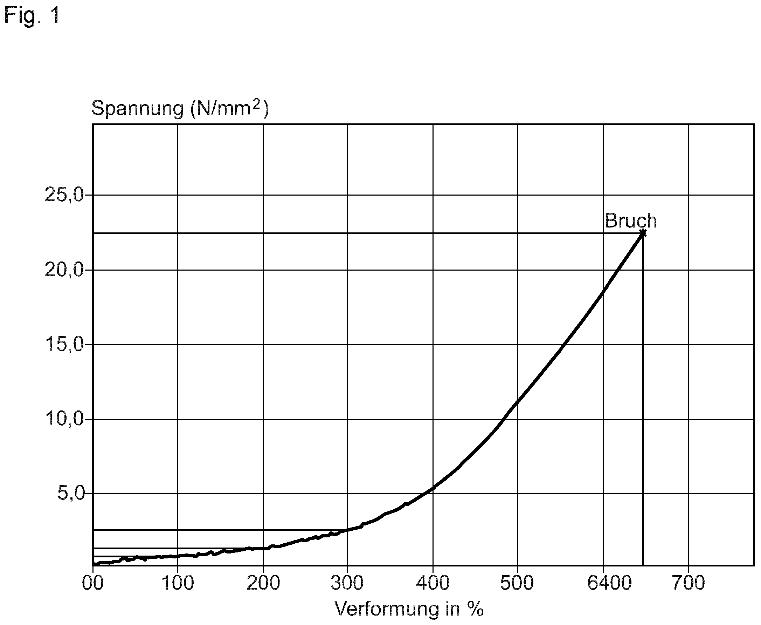

Figur 1 zeigt darüber hinaus das Verhalten einer etwa 0,5 mm dicken Probe aus erfindungsgemäßem Material aus TPEs und Pigment mit einem Anteil von 0,5 % Pigment auf die TPE Masse bei der Zugfestigkeitsprüfung. Diese Prüfung gibt Aufschluss über Zugfestigkeit und Dehnung.

Die Prüfung besteht in der Vorbereitung der Probe in gewünschter Dicke in dem in der Norm IEC 60930 beschriebenen Format. Nach der Aufnahme in die Prüfeinrichtung wird die Probe einer Dehnung bis zum Reißen unterzogen. Anschließend wird der Höchstwert des Zugwiderstands sowie die Dehnung der Probe bis zum Zeitpunkt des Reißens (Bruch, siehe Figur 1) aufgezeichnet.

Ein gutes viskoelastisches Material zeichnet sich durch ein ausgewogenes Verhältnis zwischen Zugfestigkeit und Dehnung aus. Bei polymeren Verbindungen, die aus der Kombination verschiedener polymerer Strukturen entstehen, kann eine solche Eigenschaft durch ein Gleichgewicht zwischen den verwendeten Polymeren erreicht werden. Das Vorhandensein von schlecht dispergierten Stoffen kann das Erreichen eines guten Gleichgewichts der Eigenschaften stark beeinträchtigen. Das an der Probe beobachtete Verhalten zeigt, dass das Material zu Beginn der Krafteinwirkung einen geringeren Zugwiderstand mit einer höheren Dehnung aufweist, was typisch für Elastomere ist, kurz vor dem Bruch der Probe steigt die Kurve auf höhere Werte des Zugwiderstands an. Das Verhältnis zwischen Zugfestigkeit und Dehnung ist bei dem erfindungsgemäßen Handschuhmaterial also ausgewogen.

Derzeit sind Störlichtbogentests noch nicht vollständig an die Erfordernisse bei der Verwendung von Schutzhandschuhen angepasst, was zur Folge hat, dass es keine spezifische Norm für die Zertifizierung gibt. Es gibt jedoch den Prüfgrundsatz GS-ET-42-1, um das Schutzpotenzial von Handschuhen gegen Lichtbögen zu bestimmen. Diese Methode verwendet die grundlegenden Anlagengegebenheiten der gerichteten Exposition des Box-Test Verfahrens entsprechend IEC 61482-1-2. Die Einstufung der Ergebnisse erfolgt nach Klassen, wobei die Klassen unter anderem durch den Lichtbogenstrom in kA definiert werden, sowie die Lichtbogenzeit in ms, den Mittelwert der Lichtbogenenergie in kJ und den Mittelwert der Einwirkenergie in kJ/m². Der Abstand der Proben vom Lichtbogen entspricht 300 mm. Die Aufteilung der Klassen ist wie folgt: Klasse 1 (Arc Protection Class, APC 1): 4 kA, 500 ms, 168 kJ; Klasse 2 (APC 2): 7 kA, 500 ms, 320 kJ. Die Beständigkeit besteht darin, dass keiner der geprüften Handschuhe eine Nachbrennzeit > 5 s, Durchschmelzen zur Innenseite, Lochbildung oder ein Überschreiten der Grenzwerte für Hautverbrennungen entsprechend des Stoll/Chianta Kriteriums aufweisen darf, wie es in der Norm, auf der diese Methode beruht (IEC 61482 - 1-2), festgelegt ist.

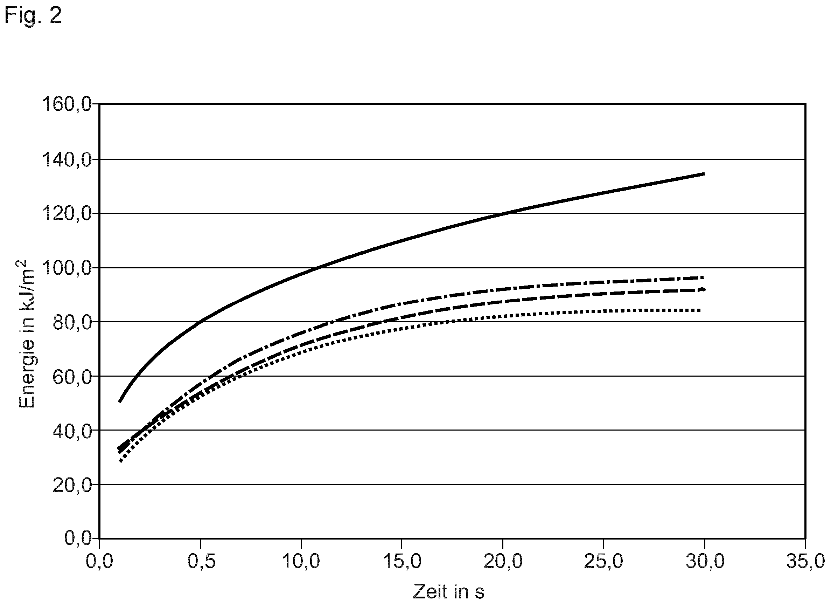

Die zulässige Energiegrenzkurve ist in Figur 2 als durchgezogene Linie dargestellt, die anderen Kurven (gepunktet, gestrichelt und Strich-Punkt) beziehen sich auf die Energie, die in den jeweiligen Sensoren unter den jeweiligen getesteten Handschuhen beobachtet wurde. Getestet wurden 3 Schutzhandschuhe der Klasse 00, die etwa 0,5 mm dick waren. Die 3 Schutzhandschuhe bestanden aus erfindungsgemäßem Material aus TPEs und Pigment mit einem Anteil von 0,5 % Pigment auf die TPE Masse und waren aus 3 unterschiedlichen Chargen. In Figur 2 entspricht jeweils eine der Kurven (gepunktet, gestrichelt und Strich-Punkt) dem Messergebnis an einem Handschuh.

Die Schutzhandschuhe, die Gegenstand der vorliegenden Erfindung sind und mit dem erfindungsgemäßen Verfahren hergestellt werden können, entsprechen mindestens der beschriebenen Klasse 1. Je nach Dicke der Schutzhandschuhe können allerdings höhere Schutzklassen für den Störlichtbogenschutz erreicht werden.

Die Erfindung hat zahlreiche Vorteile.

Das erfindungsgemäße Verfahren ermöglicht erstmals die Verwendung von TPEs als Alternative zu herkömmlichen, bis dato verwendeten Materialien für die Herstellung von elektrisch isolierenden Schutzhandschuhen.

Durch die Verwendung von TPEs und die damit obsolet gewordene Vulkanisierung weisen die Handschuhe keine schwefelbasierten Allergene auf, indem auf Vernetzungsadditive, wie Schwefel oder Schwefelspender, verzichtet werden kann.

Im Gegensatz zu Naturkautschuk weisen TPEs auch keine allergieauslösenden Proteine als Bestandteile auf.

Das Produkt (elektrisch isolierender Schutzhandschuh mit Störlichtbogenschutz) durchläuft bei der Herstellung keinen thermischen Prozess (thermosensibles Tauchen, Vulkanisierung), so dass das Verfahren energieeffizient ist.

Aufgrund der nicht-chemischen Veränderung der Materialien, die sich aus dem Wegfall des Vulkanisierungsprozesses ergibt (die Polymerketten werden nicht vernetzt), können die in dem erfindungsgemäßen Verfahren hergestellten Handschuhe wieder in organischem Lösungsmittel gelöst und für die Herstellung neuer Handschuhe verwendet werden.

Die mit dem erfindungsgemäßen Verfahren hergestellten Schutzhandschuhe erfüllen die technischen Anforderungen der Norm IEC 60903, wie durch im AITEX-Zertifizierungslabor-Spanien durchgeführte Tests bestätigen (siehe auch Figur 1 und Tabelle 2). Insbesondere die Kombination der Polymermischung mit dem Pigment bietet zusätzlichen Schutz gegen Lichtbogen gemäß der Norm Prüfung in Anlehnung an IEC 61482 - 1-2, geprüft bei West Energie in Dortmund (siehe Figur 2).

Die mit dem erfindungsgemäßen Verfahren hergestellten Schutzhandschuhe können sowohl eine glatte, als auch eine raue Oberfläche haben, welche die Anpassung an entsprechend spezifische Tätigkeiten erlaubt.

Gemäß IEC 60903 sind die mit dem erfindungsgemäßen Verfahren hergestellten Schutzhandschuhe überdies beständig gegen Ozon, Säure und extrem niedrige Temperaturen.

## Patentansprüche

1. Verfahren zur Herstellung elektrisch isolierender Schutzhandschuhe mit Störlichtbogenschutz, **dadurch gekennzeichnet, dass** das Verfahren die folgenden Schritte umfasst:
- Bereitstellen eines Ausgangsmaterials im Wesentlichen bestehend aus zwei thermoplastischen Elastomeren;
- Lösen des Ausgangsmaterials in einem organischen Lösungsmittel zur Herstellung einer flüssigen Mischung;
- Dispergieren eines Pigments in der flüssigen Mischung zur Herstellung einer Dispersion;
- Bereitstellen mindestens einer Form, die zur Herstellung von Schutzhandschuhen geeignet ist;
- Durchführen eines Tauchvorgangs umfassend mindestens einen Zyklus bestehend aus:
• einem Tauchschritt, in welchem, in einer Eintauchphase, die mindestens eine Form vollständig in die Dispersion eingetaucht wird und, in einer Austauchphase, vollständig wieder aus der Dispersion herausgenommen wird, um eine Materialschicht auf der Form zu bilden; und
• einem Trocknungsschritt, um das organische Lösungsmittel aus der Materialschicht zu entfernen;
- Optional, Abdampfen verbleibender Lösungsmittelreste nach dem Tauchvorgang; und
- Abziehen des so gebildeten Schutzhandschuhs von der mindestens einen Form **dadurch gekennzeichnet, dass** die beiden thermoplastischen Elastomere solche auf Styrol-Ethylen-Butylen-Styrol (SEBS) Basis sind, und das Pigment ein organisches Pigment, Cu-Phthalocyanin ist.

2. Verfahren nach Anspruch 1 , **dadurch gekennzeichnet, dass** das Ausgangsmaterial zusätzlich aus einer polymeren Hilfskomponente auf Styrolbasis besteht.

3. Verfahren nach zumindest einem der Ansprüche 1 bis 2, **dadurch gekennzeichnet, dass** das organische Lösungsmittel Toluol ist.

4. Verfahren nach zumindest einem der Ansprüche 1 bis 3, **dadurch gekennzeichnet, dass** eine flüssige Mischung von 10-50% m/m bezogen auf den Anteil des Ausgangsmaterials in dem organischen Lösungsmittel hergestellt wird.

5. Verfahren nach zumindest einem der Ansprüche 1 bis 4, **dadurch gekennzeichnet, dass** eine Dispersion von 0,5-10% m/m bezogen auf den Anteil des Pigments im Verhältnis zum Ausgangsmaterial hergestellt wird.

6. Verfahren nach zumindest einem der Ansprüche 1 bis 5, **dadurch gekennzeichnet, dass** das Verfahren ohne Vulkanisierung durchgeführt wird.

7. Verfahren nach zumindest einem der Ansprüche 1 bis 6, **dadurch gekennzeichnet, dass** der Tauchvorgang aus 1-50 Zyklen besteht.

8. Verfahren nach zumindest einem der Ansprüche 1 bis 7, **dadurch gekennzeichnet, dass** im Tauchschritt die mindestens eine Form in der Eintauchphase mit einer vorbestimmten Geschwindigkeit in die Dispersion eingetaucht wird und in der Austauchphase mit einer vorbestimmten Geschwindigkeit aus der Dispersion herausgenommen wird.

9. Verfahren nach zumindest einem der Ansprüche 1 bis 8, **dadurch gekennzeichnet, dass** im Trocknungsschritt die mindestens eine Form konstant rotiert wird.

10. Verfahren nach Anspruch 9, **dadurch gekennzeichnet, dass** die mindestens eine Form mit einer vorbestimmten Drehzahl und/oder Rotationsgeschwindigkeit rotiert wird.

11. Verfahren nach zumindest einem der Ansprüche 1 bis 10, **dadurch gekennzeichnet, dass** der Trocknungsschritt für eine Dauer von 20-60 min. durchgeführt wird.

12. Verfahren nach zumindest einem der Ansprüche 1 bis 11, **dadurch gekennzeichnet, dass** zumindest ein Teil des Ausgangsmaterials und des Pigments durch im Verfahren anfallendes Abfallmaterial und/oder mit dem Verfahren hergestellte Schutzhandschuhe ersetzt wird.

13. Verfahren nach zumindest einem der Ansprüche 1 bis 12, **dadurch gekennzeichnet, dass** die mindestens eine Form eine vorbestimmte Oberflächenbeschaffenheit aufweist, insbesondere eine glatte Oberfläche oder eine raue Oberfläche.

14. Elektrisch isolierender Schutzhandschuh, mit Störlichtbogenschutz, **dadurch gekennzeichnet, dass** der Schutzhandschuh im Wesentlichen aus zwei thermoplastischen Elastomeren auf Styrol-Ethylen-Butylen-Styrol (SEBS-) Basis und einem organischen Pigment, Cu-Phtalocyanin, besteht

15. Schutzhandschuh nach Anspruch 14, **dadurch gekennzeichnet, dass** der Schutzhandschuh zusätzlich aus einer polymeren Hilfskomponente auf Styrolbasis besteht.

16. Schutzhandschuh nach Anspruch 14 oder 15, **dadurch gekennzeichnet, dass** der elektrisch isolierende Schutzhandschuh mit Störlichtbogenschutz die Erfordernisse der Normklassen 00 bis 4 gemäß IEC 60903:2014 erfüllt.

## Claims

1. A method of manufacturing electrically insulating protective gloves with arc fault protection, **characterized in that** the method comprises the steps of:
- providing a starting material essentially consisting of two thermoplastic elastomers;
- dissolving the starting material in an organic solvent to produce a liquid mixture;
- dispersing a pigment in the liquid mixture to produce a dispersion;
- providing at least one mold suitable for manufacturing protective gloves;
- carrying out a dipping process comprising at least one cycle consisting of:
• a dipping step in which, in an immersion phase, the at least one mold is completely immersed in the dispersion and, in a withdrawal phase, is completely withdrawn again from the dispersion to form a material layer on the mold; and
• a drying step to remove the organic solvent from the material layer;
- optionally, evaporating remaining solvent residues after the dipping process; and
- removing the protective glove thus formed from the at least one mold, **characterized in that** the two thermoplastic elastomers are based on styrene-ethylene-butylene-styrene (SEBS) and the pigment is an organic pigment, Cu-phthalocyanine.

2. The method according to claim 1, **characterized in that** the starting material additionally consists of a polymeric auxiliary component based on styrene.

3. The method according to at least one of claims 1 to 2, **characterized in that** the organic solvent is toluene.

4. The method according to at least one of claims 1 to 3, **characterized in that** a liquid mixture of 10-50% m/m based on the proportion of the starting material in the organic solvent is produced.

5. The method according to at least one of claims 1 to 4, **characterized in that** a dispersion of 0.5-10% m/m based on the proportion of the pigment in relation to the starting material is produced.

6. The method according to at least one of claims 1 to 5, **characterized in that** the method is carried out without vulcanization.

7. The method according to at least one of claims 1 to 6, **characterized in that** the dipping process consists of 1-50 cycles.

8. The method according to at least one of claims 1 to 7, **characterized in that**, in the dipping step, the at least one mold is dipped into the dispersion at a predetermined speed in the immersion phase and is withdrawn from the dispersion at a predetermined speed in the withdrawal phase.

9. The method according to at least one of claims 1 to 8, **characterized in that**, in the drying step, the at least one mold is constantly rotated.

10. The method according to claim 11, **characterized in that** the at least one mold is rotated at a predetermined rotational frequency and/or rotational speed.

11. The method according to at least one of claims 1 to 10, **characterized in that** the drying step is carried out for a period of 20-60 minutes.

12. The method according to at least one of claims 1 to 11, **characterized in that** at least part of the starting material and the pigment is replaced by waste material generated in the method and/or protective gloves manufactured using the process.

13. The method according to at least one of claims 1 to 12, **characterized in that** the at least one mold has a predetermined surface condition, in particular a smooth surface or a rough surface.

14. An electrically insulating protective glove with arc fault protection, **characterized in that** the protective glove essentially consists of two thermoplastic elastomers based on styrene-ethylene-butylene-styrene (SEBS) and an organic pigment, Cu-phthalocyanine.

15. The protective glove according to claim 14, **characterized in that** the protective glove additionally consists of a polymeric auxiliary component based on styrene.

16. The protective glove according to claim 14 or 15, **characterized in that** the electrically insulating protective glove with arc fault protection meets the requirements of standard classes 00 to 4 according to IEC 60903:2014.

## Revendications

1. Procédé de fabrication de gants de protection électriquement isolants à protection contre les arcs électriques, **caractérisé en ce que** le procédé comprend les étapes suivantes consistant à :
- fournir un matériau de départ constitué sensiblement de deux élastomères thermoplastiques ;
- dissoudre le matériau de départ dans un solvant organique pour préparer un mélange liquide ;
- disperser un pigment dans le mélange liquide pour préparer une dispersion ;
- fournir au moins un moule approprié pour fabriquer des gants de protection ;
- exécuter une opération d'immersion comprenant au moins un cycle composé :
• d'une étape d'immersion dans laquelle, dans une phase de plongée, ledit au moins un moule est entièrement plongé dans la dispersion, et, dans une phase de remontée, est entièrement sorti de la dispersion pour former une couche de matériau sur le moule ; et
• une étape de séchage pour éliminer le solvant organique de la couche de matériau ;
- de manière facultative, faire s'évaporer les résidus de solvants restant après l'opération d'immersion ; et
- retirer ledit au moins un gant de protection ainsi formé hors dudit au moins un moule,
**caractérisé en ce que** les deux élastomères thermoplastiques sont parmi ceux à base de styrène-éthylène-butylène-styrène (SEBS), et le pigment est un pigment organique, phtalocyanine de cuivre.

2. Procédé selon la revendication 1, **caractérisé en ce que** le matériau de départ est constitué d'un composant auxiliaire polymère à base de styrène.

3. Procédé selon l'une au moins des revendications 1 à 2, **caractérisé en ce que** le solvant organique est un toluène.

4. Procédé selon l'une au moins des revendications 1 à 3, **caractérisé en ce qu'**on prépare un mélange liquide de 10 à 50 % m/m, rapporté à la part du matériau de départ dans le solvant solution organique.

5. Procédé selon l'une au moins des revendications 1 à 4, **caractérisé en ce qu'**on prépare une dispersion de 0,5 à 10 % m/m, rapporté à la proportion de pigment par rapport au matériau de départ.

6. Procédé selon l'une au moins des revendications 1 à 5, **caractérisé en ce qu'**on exécuter le procédé sans vulcanisation.

7. Procédé selon l'une au moins des revendications 1 à 6, **caractérisé en ce que** l'opération d'immersion se compose de 1 à 50 cycles.

8. Procédé selon l'une au moins des revendications 1 à 7, **caractérisé en ce que**, dans l'étape d'immersion, on plonge, dans la phase de plongée, ledit au moins un moule dans la dispersion à une vitesse prédéterminée, et, dans la phase de remontée, on le sort de la dispersion à une vitesse prédéterminée.

9. Procédé selon l'une au moins des revendications 1 à 8, **caractérisé en ce que**, dans l'étape de séchage, on met en rotation permanente ledit au moins un moule.

10. Procédé selon la revendication 9, **caractérisé en ce qu'**on met en rotation ledit au moins un moule à un régime et/ou à une vitesse de rotation prédéterminés.

11. Procédé selon l'une au moins des revendications 1 à 10, **caractérisé en ce que** l'étape de séchage est exécutée pendant une durée de 20 à 60 min.

12. Procédé selon l'une au moins des revendications 1 à 11, **caractérisé en ce qu'**on remplace une partie au moins du matériau de départ et du pigment par un matériau de déchet issus du procédé et/ou avec des gants de protection fabriqués avec le procédé.

13. Procédé selon l'une au moins des revendications 1 à 12, **caractérisé en ce que** ledit au moins un moule présente une structure superficielle prédéterminée, en particulier une surface lisse ou une surface rugueuse.

14. Gant de protection électriquement isolant à protection contre les arcs électriques, **caractérisé en ce que** le gant de protection est sensiblement constitué de deux élastomères thermoplastiques à base de styrène-éthylène-butylène-styrène (SEBS) et d'un pigment organique, phtalocyanine de cuivre.

15. Gant de protection selon la revendication 14, **caractérisé en ce que** le gant de protection est en outre constitué d'un composant auxiliaire polymère à base de styrène.

16. Gant de protection selon la revendication 14 ou 15, **caractérisé en ce que** le gant de protection électriquement isolant à protection contre les arcs électriques satisfait aux exigences des classes de normes 00 à 4 selon la norme internationale IEC 60903:2014.
